# FASCICULE DE BREVET EUROPEEN

(11) **EP 4 680 531 B1**
(45) Date de publication et mention de la délivrance du brevet: **13.05.2026**
(21) Numéro de dépôt: 24721910.8
(22) Date de dépôt: 22.04.2024
(51) Int. Cl.: B64G 1/40, B64G 1/64

(54) **STATION SPATIALE DE RAVITAILLEMENT POUR LE RAVITAILLEMENT D'UN ENGIN SPATIAL ET PROCÉDÉ DE RAVITAILLEMENT DANS L'ESPACE D'UN ENGIN SPATIAL LA METTANT EN OEUVRE**
WIEDERVERSORGUNGSRAUMSTATION ZUR WIEDERVERSORGUNG EINES RAUMFAHRZEUGS UND VERFAHREN ZUR WIEDERVERSORGUNG EINES RAUMFAHRZEUGS IM RAUM DAMIT
RESUPPLY SPACE STATION FOR RESUPPLYING A SPACECRAFT AND METHOD FOR RESUPPLYING A SPACECRAFT IN SPACE USING SAME

(30) Priorité: 26.04.2023 FR 2304088
(43) Date de publication de la demande: 21.01.2026
(73) Titulaire: Airbus Defence and Space SAS, 31402 Toulouse Cedex 4 (FR)
(72) Inventeur: MOULIN, Jacques, 31402 Toulouse cedex 4 (FR); DE DINECHIN, Frédérique, 31402 Toulouse cedex 4 (FR); CHAPUY, Marc, 31402 Toulouse cedex 4 (FR); DHIEUX, Emmanuel, 31402 Toulouse cedex 4 (FR)
(74) Mandataire: Santarelli
(86) Numéro de dépôt international: PCT/EP2024/060895
(87) Numéro de publication internationale: WO 2024/223465

(56) Documents cités:
- CN-A- 115 057 003
- FR-A1- 2 511 970
- US-A1- 2012 000 575
- US-A1- 2012 112 009
- US-A1- 2022 332 443

## Description

La présente invention s'inscrit dans le domaine du ravitaillement en ergols des engins spatiaux dans l'espace.

Plus particulièrement, l'invention concerne une station spatiale de ravitaillement pour le ravitaillement en ergol(s) d'un engin spatial en orbite autour d'un corps céleste, ainsi qu'un ensemble comprenant une telle station spatiale de ravitaillement et un tel engin spatial. L'invention concerne également un procédé de ravitaillement en ergol(s) d'un engin spatial en orbite autour d'un corps céleste, au moyen d'une telle station spatiale de ravitaillement.

### ETAT DE LA TECHNIQUE

Les engins spatiaux, tels que les satellites artificiels en orbite ou les transporteurs spatiaux pouvant comprendre une charge utile, ont en opération des besoins continus en ergol(s) pour alimenter leurs systèmes de propulsion, aussi bien pour les transferts d'orbites que pour les manœuvres de maintien en orbite, ces besoins étant d'autant plus importants que la masse de l'engin spatial est élevée.

Afin d'assurer le ravitaillement en ergols des engin spatiaux dans l'espace, il a été proposé par l'art antérieur, illustré par exemple par le document FR 2 511 970, de placer en orbite, notamment en orbite géostationnaire, des véhicules spatiaux dits « ravitailleurs », équipés d'un ou plusieurs réservoirs à ergols. Après rendez-vous avec l'engin spatial à ravitailler, le ravitailleur s'arrime à celui-ci, procède au ravitaillement, c'est-à-dire au transfert d'ergols du ravitailleur à l'engin spatial ravitaillé, puis s'en détache.

Toutefois, le transfert, d'un véhicule spatial de ravitaillement à un engin spatial, des ergols nécessaires à l'alimentation des systèmes de propulsion de ce dernier, peut s'avérer très dangereux, en raison de la nature corrosive et explosive de ces substances. En outre, les manœuvres d'arrimage d'un véhicule spatial de ravitaillement à un engin spatial à ravitailler peuvent s'avérer difficiles à réaliser, et nécessitent des calculs mécaniques / dynamiques complexes, et ce d'autant plus que les masses du véhicule spatial de ravitaillement et de l'engin spatial à ravitailler sont importantes.

Le document CN 115057003 décrit un satellite robot pour le ravitaillement de véhicules spatiaux en orbite, comprenant deux bras souples pour l'accrochage à un véhicule spatial et son ravitaillement.

La présente invention vise à remédier aux problèmes de sécurité liés au ravitaillement en ergol(s) des engins spatiaux dans l'espace, par des véhicules spatiaux positionnés en orbite, ainsi qu'à simplifier les opérations nécessaires à un tel ravitaillement.

### RESUME DE L'INVENTION

A cet effet, selon un premier aspect, il est proposé selon l'invention une station spatiale de ravitaillement pour le ravitaillement en ergol(s) d'un engin spatial comprenant au moins un réservoir, tous deux en orbite autour d'un corps céleste, ladite station spatiale de ravitaillement comportant un corps principal portant un premier module de propulsion, et comportant :
- au niveau dudit corps principal, au moins une réserve d'ergol de ravitaillement reliée à un circuit fluidique de ravitaillement,
- une canalisation fluidique flexible connectée à une première extrémité en sortie dudit circuit fluidique de ravitaillement et équipée à une deuxième extrémité d'un connecteur fluidique pour la liaison fluidique étanche de ladite canalisation fluidique flexible audit réservoir de l'engin spatial, ladite canalisation fluidique flexible étant mobile en extension et en torsion à l'extérieur dudit corps principal de la station spatiale de ravitaillement,
- un nanosatellite portant ledit connecteur fluidique équipant la deuxième extrémité de la canalisation fluidique flexible, et comportant un deuxième module de propulsion indépendant dudit premier module de propulsion, un capteur de rendez-vous et un système d'ancrage réversible à l'engin spatial dans une position déterminée dans laquelle ledit connecteur fluidique est apte à réaliser une liaison fluidique étanche avec ledit réservoir de l'engin spatial,
- et un système de transfert de fluide de ladite réserve d'ergol de ravitaillement audit réservoir de l'engin spatial, par ladite canalisation fluidique flexible, opérable lorsque ledit nanosatellite est ancré audit engin spatial par ledit système d'ancrage réversible et que ledit connecteur fluidique réalise une liaison fluidique étanche avec ledit réservoir de l'engin spatial.

Un deuxième aspect de l'invention est un ensemble comprenant au moins une station spatiale de ravitaillement et un engin spatial tels que définis selon l'invention.

Un troisième aspect de l'invention est un procédé de ravitaillement en ergol(s) d'un engin spatial en orbite autour d'un corps céleste, au moyen d'un station spatiale de ravitaillement selon l'invention positionnée dans ladite orbite à proximité de l'engin spatial, l'engin spatial comprenant au moins un réservoir, ce procédé comprenant des étapes de :
- le cas échéant, séparation du nanosatellite du corps principal de la station spatiale de ravitaillement,
- déplacement du nanosatellite en direction de l'engin spatial,
- rendez-vous du nanosatellite avec l'engin spatial,
- ancrage du nanosatellite à l'engin spatial, et liaison fluidique étanche du connecteur fluidique de la canalisation fluidique flexible porté par le nanosatellite au réservoir de l'engin spatial,
- transfert de fluide de la réserve d'ergol de ravitaillement du corps principal de la station spatiale de ravitaillement au réservoir de l'engin spatial, par la canalisation fluidique flexible,
- et séparation du nanosatellite et de l'engin spatial.

### DESCRIPTION DETAILLEE DE L'INVENTION

Un premier objet de l'invention est une station spatiale de ravitaillement pour le ravitaillement en ergol(s) d'un engin spatial à ravitailler, cet engin spatial comprenant au moins un réservoir, à réapprovisionner en ergol(s) nécessaire(s) à l'alimentation d'un système de propulsion de l'engin spatial. Cette station spatiale de ravitaillement est conçue pour permettre le ravitaillement de l'engin spatial dans une configuration dans laquelle la station spatiale de ravitaillement et l'engin spatial sont tous deux en orbite autour d'un corps céleste, au moins durant le ravitaillement, l'engin spatial pouvant par exemple faire une simple halte dans cette orbite sur une trajectoire quelconque.

La station spatiale de ravitaillement selon l'invention comporte :
- un corps principal portant un premier module de propulsion,
- au niveau de ce corps principal, au moins une réserve d'ergol de ravitaillement reliée à un circuit fluidique de ravitaillement,
- une canalisation fluidique flexible, ci-après dite de ravitaillement, connectée de manière fluidique, à une première extrémité, à ce circuit fluidique de ravitaillement, et équipée, à une deuxième extrémité, d'un connecteur fluidique pour la liaison fluidique étanche de la canalisation fluidique flexible au réservoir de l'engin spatial, la canalisation fluidique flexible étant mobile en extension et en torsion à l'extérieur du corps principal de la station spatiale de ravitaillement,
- un nanosatellite portant le connecteur fluidique équipant la deuxième extrémité de la canalisation fluidique flexible, et comportant un deuxième module de propulsion indépendant du premier module de propulsion, un capteur de rendez-vous et un système d'ancrage réversible à l'engin spatial dans une position déterminée dans laquelle le connecteur fluidique est apte à réaliser une liaison fluidique étanche avec le réservoir de l'engin spatial,
- et un système de transfert de fluide de la réserve d'ergol de ravitaillement de la station spatiale de ravitaillement au réservoir de l'engin spatial, par ladite canalisation fluidique flexible, ce système de transfert de fluide étant opérable lorsque le nanosatellite est ancré à l'engin spatial par le système d'ancrage et que le connecteur fluidique est opérationnellement connecté au réservoir de l'engin spatial, c'est-à-dire qu'il réalise une liaison fluidique étanche avec ce réservoir.

On entend dans la présente description, par nanosatellite, de manière classique en elle-même, une plateforme spatiale artificielle de petite taille, typiquement de quelques dizaines de centimètres de côté, et de faible masse, typiquement de 1 à 10 kg, comportant au moins un module de propulsion, et équipée de systèmes embarqués miniaturisés classiques pour la réalisation des fonctions de base d'un engin spatial, telles que les fonctions électroniques, les fonctions de communication, de navigation, etc. Selon l'invention, ces systèmes embarqués peuvent ou non être suffisants pour permettre un fonctionnement autonome du nanosatellite, ce fonctionnement pouvant notamment être commandé, au moins pour partie, depuis le corps principal de la station spatiale de ravitaillement.

Le ravitaillement en ergol(s) d'un engin spatial ne nécessite avantageusement pas que ce dernier s'approche du corps principal de la station spatiale de ravitaillement. Cette dernière permet en effet de réaliser son ravitaillement à distance, par déplacement jusqu'à l'engin spatial du nanosatellite entrainant avec lui la canalisation fluidique flexible de ravitaillement, par laquelle les ergols seront transférés.

La station spatiale de ravitaillement selon l'invention permet ainsi de manière tout à fait avantageuse de ravitailler l'engin spatial en ergol(s) avec un degré élevé de sécurité opérationnelle. Tout au long des opérations de ravitaillement, l'engin spatial à ravitailler peut rester à distance de la station spatiale de ravitaillement, en zone dite « sûre », cette distance étant d'autant plus importante que la longueur de la canalisation fluidique flexible de ravitaillement est élevée. Préférentiellement, cette longueur est au moins égale à 50 mètres, si bien que l'engin spatial à ravitailler peut rester en permanence hors de la zone à risque associée à une explosion de la station spatiale de ravitaillement.

Ceci permet en particulier de diminuer les contraintes, sur la conception et les opérations de proximité, provenant des aspects de sécurité mis en jeu dans le cadre d'une interaction entre des engins spatiaux. Cette diminution s'applique pour la station spatiale de ravitaillement tout comme pour l'engin spatial à ravitailler. En particulier, le corps principal de la station spatiale de ravitaillement peut de ce fait présenter une architecture simple, si bien qu'il est facile à fabriquer. Ainsi, la mise en œuvre, au sein de la station spatiale de ravitaillement selon l'invention, d'une canalisation fluidique flexible de ravitaillement pouvant s'étendre sur une grande distance hors du corps principal, entrainée par le nanosatellite pourvu de son propre module de propulsion, permet avantageusement de s'affranchir de contraintes de sécurité, et permet une architecture et des opérations moins coûteuses que celles permises par les solutions pour le ravitaillement d'engins spatiaux en orbite proposées par l'art antérieur.

Un avantage supplémentaire de l'invention est que le nanosatellite, qui est équipé de l'interface fluidique de ravitaillement, présente une masse très faible, et de préférence réduite au minimum, ce qui facilite les calculs pour son rendez-vous avec l'engin spatial, et son ancrage réversible à ce dernier, ainsi que les manœuvres de l'engin spatial à ravitailler pour se maintenir en position tout au long de son ravitaillement. Avantageusement encore, les efforts d'ancrage du nanosatellite sur l'engin spatial à ravitailler sont réduits, toujours du fait de la masse réduite du nanosatellite.

En outre, la canalisation fluidique flexible, grâce à sa mobilité en extension et torsion, laisse une grande liberté de mouvement au nanosatellite, ce dont il résulte une plus grande marge de manœuvre pour l'engin spatial à ravitailler.

La supervision du remplissage du réservoir de l'engin spatial est par ailleurs également facilitée, notamment grâce à un temps de réaction réduit du nanosatellite, qui peut être opérable de manière autonome ou commandée depuis le corps principal de la station spatiale de ravitaillement.

Pour l'ensemble de ces raisons, la station spatiale de ravitaillement selon l'invention constitue une solution de grande agilité pour le ravitaillement en orbite des engins spatiaux, le nanosatellite et la canalisation fluidique flexible pouvant facilement se déplacer dans l'espace autour du corps principal de la station spatiale de ravitaillement, pour atteindre toute zone visée.

Dans des modes de réalisation particuliers de l'invention, la station spatiale de ravitaillement comporte une pluralité de réserves d'ergol de ravitaillement. Ces réserves peuvent contenir le même ergol, ou des ergols différents. Dans cette dernière configuration, la station spatiale constitue avantageusement une solution versatile fournissant à elle seule la possibilité d'approvisionner chaque engin spatial donné en plusieurs types d'ergols différents.

Elle est en outre avantageusement évolutive, et peut notamment être modifiée pour s'adapter aux besoins, notamment par modification des types d'ergols contenus dans les réserves d'ergol de ravitaillement qui l'équipent et/ou modification du nombre et/ou de la contenance de ces réserves d'ergol.

La station spatiale de ravitaillement selon l'invention peut en particulier être adaptée pour alimenter en ergol(s) tous types d'engins spatiaux, notamment, mais non limitativement, les engins spatiaux à systèmes de propulsion :
- chimique,
- à biliquide, l'engin spatial comportant un réservoir de carburant, un réservoir d'oxydant et un réservoir de pressurisation, chacun pouvant être rempli depuis la station spatiale de ravitaillement,
- à monopropergol, l'engin spatial comportant un réservoir de carburant et optionnellement un réservoir de pressurisation,
- plasmique, l'engin spatial comportant un ou plusieurs réservoirs à xénon ou autre gaz rare,
- à eau (transfert d'eau), oxygène et hydrogène étant produit par l'engin spatial. La station spatiale de ravitaillement selon l'invention peut en outre répondre à l'une ou plusieurs des caractéristiques décrites ci-après, mises en œuvre isolément ou en chacune de leurs combinaisons techniquement opérantes.

Dans des modes de réalisation particulièrement préférés de l'invention, la station spatiale de ravitaillement comprend une ligne de télémétrie et/ou une ligne de télécommande assurant une liaison de communication entre le corps principal et le nanosatellite. Ce dernier comprend en outre de préférence une interface de communication avec l'engin spatial, pour :
- la réception, et la transmission à la ligne de télémétrie, de données représentatives du niveau de remplissage du réservoir de l'engin spatial, ainsi que, de préférence, de différentes données pouvant être mesurées à bord de l'engin spatial, telles que des données de pression et/ou température des ergol(s), débit de fluides dans les circuits fluidiques éventuels, statut des vannes montées sur de tels circuits, etc.;
- ainsi de préférence que pour la commande d'actions spécifiques nécessaires au transfert de fluide, par transmission de signaux de commande provenant du corps principal et véhiculés par la ligne de télécommande.

Préférentiellement, le nanosatellite est configuré pour que cette interface de communication devienne automatiquement opérationnelle, c'est-à-dire assure la communication avec l'engin spatial, lorsque le nanosatellite s'ancre à ce dernier par son système d'ancrage réversible.

La liaison fluidique étanche de la canalisation fluidique flexible de ravitaillement au réservoir de l'engin spatial s'effectue par le biais d'un connecteur fluidique de l'engin spatial apte à coopérer avec le connecteur fluidique équipant la deuxième extrémité de la canalisation fluidique flexible, et connecté de manière fluidique au réservoir à réapprovisionner. Ce connecteur fluidique de l'engin spatial, dit connecteur fluidique coopérant, peut être directement porté par ce réservoir. Dans la très grande majorité des cas, il est relié à ce réservoir par le biais d'un circuit fluidique. Alors, la liaison fluidique de la canalisation fluidique flexible de ravitaillement au réservoir de l'engin spatial s'effectue par les intermédiaires successifs de ce connecteur fluidique coopérant et de ce circuit fluidique de l'engin spatial.

L'interface de communication avec l'engin spatial portée par le nanosatellite est de préférence configurée pour contrôler ce connecteur fluidique coopérant, porté par l'engin spatial, ainsi que des vannes éventuellement disposées sur le circuit fluidique de l'engin spatial. Un tel contrôle peut comprendre l'ouverture et la fermeture, le contrôle du débit, etc.

Dans des modes de réalisation particuliers de l'invention, la station spatiale de ravitaillement selon l'invention comprend en outre, au niveau du corps principal, un module de commande du nanosatellite, en particulier du deuxième module de propulsion, du capteur de rendez-vous, du système d'ancrage réversible à l'engin spatial, ainsi que du connecteur fluidique équipant la canalisation fluidique flexible, ce module de commande étant de préférence programmé pour émettre des signaux de commande en fonction des données fournies par le capteur de rendez-vous et l'interface de communication avec l'engin spatial, en particulier pour la réalisation des étapes de déplacement du nanosatellite, rendez-vous avec l'engin spatial, ancrage à ce dernier, séparation de ce dernier, etc.

Ce module de commande, classique en lui-même, peut comprendre un ou plusieurs processeurs et moyens de traitement et de stockage des données reçues du nanosatellite et de l'engin spatial.

Il est de préférence également programmé pour contrôler le système de transfert de fluide de la réserve d'ergol de ravitaillement au réservoir de l'engin spatial, en particulier d'éventuelles pompes, vannes, etc., pouvant appartenir à ce système, disposées au niveau du corps principal, de la canalisation fluidique flexible et/ou du nanosatellite, ainsi que, préférentiellement, au niveau de l'engin spatial. Ainsi, le module de commande de la station spatiale de ravitaillement est de préférence configuré pour commander, au sein de l'engin spatial, le connecteur fluidique coopérant et d'éventuelles vannes équipant le circuit fluidique reliant le connecteur fluidique coopérant au réservoir à ravitailler.

Dans des modes de réalisation particuliers de l'invention, la station spatiale de ravitaillement comprend ainsi, disposé dans le corps principal, de préférence en tant que sous-module du module de commande, un module de gestion du transfert de fluide de la réserve d'ergol de ravitaillement portée par le corps principal au réservoir de l'engin spatial. Ce module est notamment configuré pour gérer les volumes d'ergol contenus d'une part dans la réserve d'ergol de ravitaillement, et d'autre part dans le réservoir de l'engin spatial, ainsi que les transferts de fluide de l'une à l'autre. Il est également de préférence configuré pour contrôler la thermodynamique des fluides transférés, notamment leur température et leur pression, tout au long de l'architecture fluidique entre la réserve d'ergol de ravitaillement et le réservoir de l'engin spatial, par contrôle de capteurs adéquats prévus à cet effet en différents points de cette architecture fluidique. Il est en outre de préférence configuré pour gérer, notamment en ouverture et fermeture, les différentes vannes disposées sur les différents circuits et canalisations fluidiques assurant la liaison entre la réserve d'ergol de ravitaillement et le réservoir de l'engin spatial.

De manière plus générale, préférentiellement, la station spatiale de ravitaillement selon l'invention, et plus particulièrement ledit module de commande, est configurée pour que les communications pour l'échange des données de mesure, et la transmission des signaux de commande, soient réalisées de façon directe entre elle et l'engin spatial à ravitailler, via le nanosatellite, sans passer par l'intermédiaire d'une quelconque station de commande distante. Une telle caractéristique facilite avantageusement la supervision du remplissage du réservoir de l'engin spatial.

La station spatiale de ravitaillement selon l'invention est destinée à être stationnée dans une position déterminée dans l'espace, en orbite autour d'un corps céleste, notamment en orbite terrestre ou lunaire, par exemple une orbite géostationnaire.

Elle comporte, au niveau du corps principal, toutes les fonctions classiques d'un engin spatial autonome, et notamment tous les systèmes embarqués nécessaires à son autonomie, tels que les systèmes de contrôle thermique, de puissance, de gestion des données, etc., ainsi que tous les éléments pour son maintien en orbite et éventuellement son déplacement, le cas échéant pour un transfert d'orbite. Elle comporte ainsi en particulier un module de propulsion, nommé dans la présente description premier module de propulsion, pouvant être de tout type, notamment de type chimique ou électrique, ainsi qu'une ou plusieurs cuve(s) d'ergol(s) disposée(s) au niveau de son corps principal, pour l'alimentation de ce module de propulsion. Préférentiellement, cette/ces cuve(s) d'ergol(s) est/sont uniquement destinée(s) à ses propres besoins, et est/sont donc distincte(s) de la réserve d'ergol de ravitaillement également portée par le corps principal. Un tel découplage entre l'alimentation du premier module de propulsion et le ravitaillement de l'engin spatial confère avantageusement une plus grande flexibilité sur la durée de la mission de la station spatiale de ravitaillement. Néanmoins, suivant les cas de services, un couplage entre les réserves d'ergol de ravitaillement et les cuves d'ergol(s) pour la propulsion principale de la station spatiale de ravitaillement peut être envisagé.

Le premier module de propulsion, porté par le corps principal de la station spatiale, peut être de tout type classique en lui-même, notamment du type électrique ou chimique.

La réserve d'ergol de ravitaillement peut contenir tout type d'ergol stockable classique en lui-même pour l'alimentation de moyens de propulsion d'engins spatiaux, par exemple des ergols chimiques liquides, tels que l'hydrazine, ou gazeux, tels que le xénon.

La station spatiale de ravitaillement selon l'invention peut également comporter, portée(s) par le corps principal, une ou plusieurs cuves dites poubelles, pour la réception éventuelle de produits de purge issus de l'engin spatial. Dans une telle configuration, la station spatiale de ravitaillement comporte une seconde canalisation fluidique flexible, dite de purge, de caractéristiques similaires à celles de la canalisation fluidique flexible de ravitaillement de l'engin spatial, et apte à être connectée de manière fluidique à l'engin spatial pour en évacuer les produits de purge.

Le nanosatellite présente une petite taille. Il s'inscrit de préférence dans un cylindre de 30 à 60 cm, par exemple d'environ 50 cm, de diamètre.

Le deuxième module de propulsion, porté par le nanosatellite, peut être alimenté depuis un réservoir à ergol(s) propre au nanosatellite. Ainsi, dans des modes de réalisation particuliers de l'invention, le nanosatellite comporte un réservoir à ergol(s) qui lui est propre, et un système d'alimentation du deuxième module de propulsion depuis ce réservoir à ergol(s). Il peut autrement en être dépourvu de tel réservoir à ergol(s).

Dans des modes de réalisation particuliers de l'invention, l'alimentation en ergol(s) du deuxième module de propulsion, porté par le nanosatellite, est réalisée depuis le corps principal :
- soit par l'intermédiaire d'un réservoir à ergol(s) équipant le nanosatellite, ce réservoir étant rempli au besoin depuis le corps principal de la station spatiale de ravitaillement,
- soit, préférentiellement, directement, c'est-à-dire sans passer par un quelconque réservoir qui appartiendrait en propre au nanosatellite.

Ainsi, dans des modes de réalisation particuliers de l'invention, la station spatiale de ravitaillement comporte un conduit d'alimentation en ergol(s) du deuxième module de propulsion du nanosatellite depuis le corps principal. Dans une telle configuration, le nanosatellite est de préférence dépourvu de réservoir à ergols propre, ce qui simplifie avantageusement sa conception. Le conduit d'alimentation relie le nanosatellite à une cuve d'ergol(s) portée par le corps principal de la station spatiale. Cette cuve d'ergol(s) peut être celle utilisée pour l'alimentation du premier module de propulsion, ou être différente, et destinée uniquement aux besoins propres du nanosatellite. Dans des variantes de l'invention, le deuxième module de propulsion, porté par le nanosatellite, est alimenté par le conduit d'alimentation depuis la réserve d'ergol de ravitaillement portée par le corps principal.

Le nanosatellite peut dans tous les cas comporter un circuit fluidique qui lui est propre, et le cas échéant pourvu de vannes, pompes, etc., et qui est relié d'une part au conduit d'alimentation et d'autre part au deuxième module de propulsion, pour permettre l'alimentation en ergol(s) de celui-ci.

Il est en outre traversé par les différentes canalisations, lignes de télémétrie, lignes de télécommande, etc., provenant de la station spatiale de ravitaillement et destinées à être connectées à l'engin spatial, notamment par l'intermédiaire du connecteur fluidique et de l'interface de communication.

Le deuxième module de propulsion, porté par le nanosatellite, peut être de tout type classique en lui-même, notamment de type chimique ou électrique. Il peut comporter un nombre adéquat de tuyères pour ses déplacements en translation et ses déplacements en rotation.

Dans des modes de réalisation particuliers de l'invention, le nanosatellite et le corps principal sont équipés de moyens d'arrimage coopérants pour l'arrimage réversible du nanosatellite au corps principal. Le nanosatellite se trouve ainsi de préférence arrimé au corps principal en mode inactif, lorsqu'aucun engin spatial n'est à ravitailler, et il en est libéré, par désactivation des moyens d'arrimage coopérants, pour les opérations de ravitaillement de l'engin spatial. Le nanosatellite est en outre de préférence arrimé au corps principal durant toutes les opérations de lancement, mise en orbite et transfert d'orbites de la station spatiale de ravitaillement.

Dans des modes de réalisation particuliers de l'invention, la station spatiale de ravitaillement comprend un câble électrique assurant une alimentation électrique entre le corps principal et le nanosatellite, pour l'alimentation électrique de ce dernier depuis le corps principal.

Le nanosatellite peut optionnellement comprendre son propre ordinateur de bord et ses propres moyens logiciels. Préférentiellement, comme indiqué ci-avant, il en est dépourvu, son contrôle étant assuré par des moyens logiciels portés par le corps principal de la station spatiale, par l'intermédiaire de lignes de télémétrie et de télécommande dédiées.

Le capteur de rendez-vous porté par le nanosatellite peut être de tout type classique en lui-même pour la réalisation d'opérations de proximité, et en particulier de la boucle fermée finale de la manœuvre de rendez-vous, tel qu'une caméra vidéo, un rétroréflecteur, un radar, un système laser de type lidar, etc. Il est de préférence de type semi-automatique.

Dans des modes de réalisation particuliers de l'invention, le nanosatellite comporte au moins, à l'avant, c'est-à-dire au niveau d'une face dite avant disposée, lors de son déplacement vers l'engin spatial à ravitailler, en regard de ce dernier, un capteur du type apte à permettre la vision basse navigation. Il peut optionnellement également comprendre, en association avec un tel capteur, un spot d'éclairage de la zone observée par le capteur.

L'intelligence de rendez-vous peut être portée par le nanosatellite. Elle est de préférence plutôt portée par le corps principal de la station spatiale de ravitaillement.

Le système de rendez-vous de la station spatiale de ravitaillement selon l'invention, comprenant le capteur de rendez-vous et l'intelligence de rendez-vous, est de préférence de type actif, et apte à coopérer avec des moyens de rendez-vous passifs de l'engin spatial à ravitailler.

On entend dans la présente description, par système d'ancrage réversible, un système d'ancrage libérable sur commande pour provoquer la séparation du nanosatellite et de l'engin spatial.

Le système d'ancrage réversible pour l'ancrage du nanosatellite à l'engin spatial peut être de tout système d'ancrage intelligent libérable sur commande classique en lui-même. Il est de préférence compatible avec les systèmes d'ancrage équipant usuellement les engins spatiaux. A cet égard, le nanosatellite peut comporter plusieurs systèmes d'ancrage différents, de sorte à ce qu'il puisse s'adapter à différentes configurations d'engins spatiaux à ravitailler.

Les systèmes d'ancrage réversibles non générateurs de débris à leur libération sont particulièrement préférés dans le cadre de l'invention.

Préférentiellement, le système d'ancrage réversible est choisi pour générer de faibles niveaux de chocs afin de ne pas impacter la performance en vol des équipements de l'engin spatial. Il est par exemple de type mécanique, magnétique ou électromagnétique. Il comprend des moyens de rigidification mécanique de la liaison du nanosatellite à l'engin spatial.

Il est préférentiellement de petite taille. Il peut par exemple être configuré pour s'inscrire dans un cylindre de 10 à 15 cm de diamètre.

Il est en outre de préférence disposé sur une face avant du nanosatellite, telle que définie ci-avant.

Le nanosatellite de la station spatiale de ravitaillement est solidaire de la deuxième extrémité de la canalisation fluidique flexible de ravitaillement. Il porte le connecteur fluidique équipant cette canalisation, dans une position permettant, lorsque le nanosatellite est ancré à l'engin spatial, sa liaison fluidique étanche au réservoir de ce dernier, par l'intermédiaire du connecteur fluidique coopérant, et le cas échéant du circuit fluidique, de l'engin spatial.

Le connecteur fluidique peut être configuré de sorte que sa connexion au connecteur fluidique coopérant porté par l'engin spatial à ravitailler nécessite la mise en œuvre d'opérations spécifiques. Il peut autrement être configuré pour que cette connexion se réalise de manière automatique consécutivement à l'ancrage du nanosatellite à l'engin spatial.

Ainsi, dans des modes de réalisation particuliers de l'invention, le système d'ancrage et le connecteur fluidique sont configurés de sorte que l'ancrage du nanosatellite à l'engin spatial réalise également la liaison fluidique étanche de la canalisation fluidique flexible avec le réservoir de l'engin spatial, de préférence simultanément à l'ancrage mécanique, ou juste après.

Il en est de préférence également de même pour la connexion électrique de l'engin spatial au corps principal de la station spatiale de ravitaillement, via l'interface de communication avec l'engin spatial portée par le nanosatellite et les lignes de télémétrie et télécommande.

Le système de transfert de fluide de la réserve d'ergol de ravitaillement au réservoir de l'engin spatial, par la canalisation fluidique flexible de ravitaillement, est opérable lorsque le nanosatellite est ancré à l'engin spatial par le système d'ancrage réversible et que le connecteur fluidique réalise une liaison fluidique étanche de la canalisation fluidique flexible de ravitaillement avec le réservoir de l'engin spatial. Il peut être du type passif, fonctionnant par la différence des pressions entre la réserve d'ergol de ravitaillement de la station spatiale de ravitaillement et le réservoir de l'engin spatial. Un tel mode de réalisation présente les avantages d'une simplicité de fabrication et mise en œuvre, et d'un coût réduit, mais avec l'inconvénient que le transfert s'arrête à l'équilibre des pressions. Cela peut obliger à gérer la quantité d'ergol inépuisable. On entend dans la présente description, par « ergol inépuisable », l'ergol restant présent en permanence dans la réserve d'ergol de ravitaillement, du fait que cette dernière n'est jamais complètement vidée pendant la période de vie de la station spatiale de ravitaillement (période durant laquelle elle est en opération). Dans des variantes de l'invention, le système de transfert de fluide est du type actif, et il comprend au moins une pompe de circulation de fluide depuis la réserve d'ergol de ravitaillement, dans la canalisation fluidique flexible de ravitaillement, en direction de la deuxième extrémité de cette dernière. Cette pompe est de préférence disposée au niveau du circuit fluidique de ravitaillement porté par le corps principal de la station spatiale de ravitaillement. Un tel mode de réalisation présente notamment l'avantage d'une grande rapidité du transfert du fluide, ainsi que de limiter la quantité d'ergol inépuisable.

Dans des modes de réalisation particulièrement avantageux de l'invention, la canalisation fluidique flexible, et le cas échéant le câble électrique, la ligne de télémétrie et/ou la ligne de télécommande, sont contenus dans un tube ombilical flexible fixé à une première extrémité au corps principal de la station spatiale de ravitaillement, et à une deuxième extrémité au nanosatellite.

Ce tube ombilical est avantageusement mobile en extension et en torsion à l'extérieur du corps principal de la station spatiale de ravitaillement. Sa longueur est au moins égale à 50 mètres.

Plus généralement, il contient de préférence l'ensemble des éléments reliant le corps principal de la station spatiale de ravitaillement au nanosatellite, nécessaires pour délivrer à ce dernier l'énergie, les commandes et la télémétrie requises pour ses déplacements et opérations diverses, ainsi que pour le transfert de fluide. Ce tube ombilical peut ainsi notamment contenir :
- une ou plusieurs canalisations fluidiques flexibles de ravitaillement, pour le transfert d'ergol(s) de ravitaillement depuis le corps principal de la station spatiale jusqu'à l'engin spatial à ravitailler,
- une ou plusieurs canalisations fluidiques flexibles de purge, pour ramener les produits de purge éventuels de l'engin spatial au corps principal de la station spatiale de ravitaillement,
- un ou plusieurs conduits pour l'alimentation en ergol(s), depuis le corps principal, du deuxième module de propulsion, porté par le nanosatellite, ,
- un câble de puissance reliant le nanosatellite au corps principal,
- un ou plusieurs câbles de télécommande pour la commande du nanosatellite et/ou de l'engin spatial depuis le corps principal,
- un ou plusieurs câbles de télémétrie pour la transmission au corps principal de données issues du nanosatellite et/ou de l'engin spatial,
- etc.

Dans des modes de réalisation particulièrement avantageux de l'invention, notamment du point de vue de son adaptabilité à plusieurs types d'engins spatiaux différents, la station spatiale de ravitaillement comporte une pluralité de réserves d'ergol de ravitaillement portées par ledit corps principal. Ces différentes réserves peuvent contenir le même ergol, ou des ergols différents. Elles peuvent être associées au même circuit fluidique de ravitaillement, ou à des circuits fluidiques de ravitaillement différents, et à une même canalisation fluidique flexible de ravitaillement ou à des canalisations fluidiques flexibles de ravitaillement différentes.

Préférentiellement, lorsque la station spatiale de ravitaillement comporte une réserve d'ergol liquide et une réserve d'ergol gazeux, chacune est associée à son propre circuit fluidique de ravitaillement et à sa propre canalisation fluidique flexible de ravitaillement.

Lorsque la station spatiale de ravitaillement selon l'invention comporte une pluralité de canalisations fluidiques flexibles de ravitaillement reliées à un même nanosatellite, pour le transfert de fluide de ravitaillement vers un même engin spatial, chacune de ces canalisations et le connecteur fluidique associé répondant de préférence à l'une ou plusieurs des caractéristiques décrites ci-avant.

Dans des modes de réalisation préférés de l'invention, la station spatiale de ravitaillement comporte :
- une pluralité de nanosatellites tels que définis ci-avant, chacun étant associé à une canalisation fluidique flexible de ravitaillement telle que définie ci-avant,
- et, pour chaque couple nanosatellite / canalisation fluidique flexible, un système de transfert de fluide d'une réserve d'ergol de ravitaillement portée par le corps principal au réservoir d'un engin spatial, par ladite canalisation fluidique flexible, ce système de transfert de fluide étant opérable lorsque le nanosatellite est ancré à l'engin spatial à ravitailler par le système d'ancrage réversible et lorsque le connecteur fluidique de la canalisation fluidique flexible est opérationnellement connecté au réservoir de l'engin spatial, et réalise ainsi la liaison fluidique étanche de la canalisation fluidique flexible à ce réservoir.

Un tel mode de réalisation permet avantageusement de procéder simultanément à plusieurs opérations de ravitaillement d'engins spatiaux différents. Ce ravitaillement simultané peut être réalisé dans des conditions de sécurité particulièrement élevées, et ce d'autant plus lorsque chaque engin spatial ravitaillé est localisé dans une zone éloignée des autres, par déploiement d'un nanosatellite dans chacune de ces zones.

Dans un tel mode de réalisation, il est tout à fait avantageux que la station spatiale de ravitaillement comporte une pluralité de réserves d'ergol de ravitaillement, contenant des ergols différents les unes des autres. Chaque nanosatellite peut alors être associé, par le biais de la canalisation fluidique flexible associée, à l'une ou plusieurs de ces réserves d'ergol de ravitaillement.

Dans des modes de réalisation particuliers de l'invention, le circuit fluidique de ravitaillement associé à chaque réserve d'ergol de ravitaillement est connecté à plusieurs canalisations fluidiques flexibles de ravitaillement, associées à des nanosatellites différents, augmentant par là-même encore la polyvalence de la station spatiale de ravitaillement selon l'invention. Ce circuit fluidique est alors de préférence connecté à ces canalisations fluidiques flexibles par le biais d'une vanne multivoies permettant de diriger le flux de fluide vers l'une ou l'autre des canalisations.

Un autre objet de l'invention concerne un ensemble comprenant au moins une station spatiale de ravitaillement selon l'invention et un engin spatial à ravitailler, tels que définis ci-avant.

L'invention porte également sur des interfaces spécifiquement définies et appartenant à l'engin spatial à ravitailler. Les interfaces de l'engin spatial peuvent être définies par un standard ou définies simultanément aux interfaces du nanosatellite.

Dans des modes de réalisation particuliers de l'invention, cette station spatiale de ravitaillement et cet engin spatial sont reliés l'un à l'autre par une canalisation fluidique flexible s'étendant depuis la station spatiale de ravitaillement, un nanosatellite associé à cette canalisation fluidique flexible étant ancré à l'engin spatial par son système d'ancrage réversible. Dans une telle configuration, la réserve d'ergol de ravitaillement de la station spatiale et le réservoir du satellite peuvent être en connexion fluidique l'un avec l'autre, par l'intermédiaire de la canalisation fluidique flexible de ravitaillement et du connecteur fluidique qui l'équipe.

L'ensemble selon l'invention peut notamment comporter une pluralité d'engins spatiaux tels que définis ci-avant, chacun pouvant être relié et connecté de manière fluidique à la station spatiale de ravitaillement par l'intermédiaire d'une canalisation fluidique flexible s'étendant depuis cette dernière, et d'un nanosatellite associé.

Selon un autre aspect, la présente invention concerne un procédé de ravitaillement en ergol(s) d'un engin spatial en orbite autour d'un corps céleste, cet engin spatial comprenant au moins un réservoir, au moyen d'un station spatiale de ravitaillement selon l'invention positionnée dans la même orbite, à proximité de l'engin spatial. Ce procédé comprend des étapes successives de :
- le cas échéant, lorsque le nanosatellite se trouve dans une configuration arrimée au corps principal de la station spatiale de ravitaillement, séparation du nanosatellite de ce corps principal,
- déplacement du nanosatellite en direction de l'engin spatial,
- rendez-vous du nanosatellite avec l'engin spatial,
- ancrage du nanosatellite à l'engin spatial, par le système d'ancrage réversible dont il est muni à cet effet, et liaison fluidique étanche du connecteur fluidique de la canalisation fluidique flexible porté par le nanosatellite au réservoir de l'engin spatial, notamment par le biais d'un connecteur fluidique coopérant porté par l'engin spatial, et d'un circuit fluidique éventuel de ce dernier,
- transfert de fluide de la réserve d'ergol de ravitaillement du corps principal de la station spatiale de ravitaillement jusqu'au réservoir de l'engin spatial, par la canalisation fluidique flexible,
- et, une fois l'étape de transfert de fluide terminée, déconnexion du connecteur fluidique, et le cas échéant électrique, notamment de l'interface de communication, et séparation du nanosatellite et de l'engin spatial, par libération du système d'ancrage réversible. Le nanosatellite peut alors être ramené jusqu'au corps principal de la station spatiale pour y être arrimé, ou être positionné dans une position de parking dans l'espace, en attente d'une nouvelle mission, ou encore être utilisé directement pour une nouvelle mission de ravitaillement d'un engin spatial.

On entend dans la présente description, par « à proximité de », le fait que l'engin spatial se trouve à une distance du corps principal de la station spatiale inférieure à la longueur de la canalisation fluidique flexible. De préférence, cette distance est proche de cette longueur, de sorte à ce que l'engin spatial se trouve dans une zone la plus éloignée possible du corps principal de la station spatiale.

Le procédé selon l'invention peut comprendre une étape préalable de mise de la station spatiale de ravitaillement dans l'orbite souhaitée, cette étape préalable pouvant être réalisée de toute manière classique en elle-même.

Il peut également comprendre une étape préalable de déplacement de l'engin spatial à proximité de la station spatiale de ravitaillement, par exemple par commande dudit engin spatial depuis une station de commande distante.

Dans des modes de mise en œuvre particuliers de l'invention, le nanosatellite est commandé par un module de commande disposé dans le corps principal de la station spatiale de ravitaillement, des signaux de commande étant successivement déterminés et envoyés au nanosatellite par ce module de commande pour la réalisation des étapes de déplacement, rendez-vous, ancrage à l'engin spatial et séparation de l'engin spatial.

Dans des modes de mise en œuvre particuliers de l'invention, l'étape de transfert de fluide est contrôlée par un module de gestion du transfert de fluide disposé dans le corps principal de la station spatiale de ravitaillement.

Parmi l'ensemble des étapes ci-dessus, seule l'étape de déplacement de l'engin spatial à proximité de la station spatiale de ravitaillement est réalisée par l'engin spatial lui-même. Il peut à cet effet recevoir des signaux de commande d'une station de commande distante, par exemple d'une station de commande au sol. L'ensemble des autres étapes sont réalisées par la station spatiale de ravitaillement, de préférence sous son contrôle direct, l'engin spatial n'ayant alors qu'à contrôler sa propre position dans l'espace jusqu'à sa séparation du nanosatellite.

Ainsi, préférentiellement, l'intervention d'une station de commande distante n'est requise que pour les opérations de planification macroscopique du ravitaillement, notamment la coordination entre l'engin spatial et la station spatiale de ravitaillement, la gestion de l'état de la station spatiale de ravitaillement, des anomalies éventuelles, la maintenance, etc. La communication entre l'engin spatial parvenu à proximité de la station spatiale de ravitaillement et cette dernière s'effectue quant à elle de préférence directement, sans intermédiaire autre que des lignes de télémétrie et télécommande prévues à cet effet entre le corps principal et la nanosatellite, et l'interface de communication avec l'engin spatial portée par le nanosatellite.

Le déplacement du nanosatellite en direction de l'engin spatial à ravitailler entraine le déploiement, hors du corps principal de la station spatiale de ravitaillement, de la canalisation fluidique flexible de ravitaillement qui en est solidaire à sa deuxième extrémité, et, plus généralement, de l'ensemble des canalisations, conduits, câbles, lignes de télémétrie et/ou de télécommande, reliant au nanosatellite des constituants de la station spatiale portés par le corps principal.

On entend dans la présente description, par étape de rendez-vous du nanosatellite avec l'engin spatial, de manière classique en elle-même, toutes les phases de mouvement du nanosatellite, et le cas échéant de l'engin spatial, nécessaires à et précédant leur ancrage physique à proprement parler. Pour cette étape de rendez-vous, la trajectoire d'approche du nanosatellite fait appel aux connaissances générales de l'homme du métier, notamment en ce qui concerne les techniques de rendez-vous (RV) orbital. Cette étape est de préférence commandée depuis le corps principal de la station spatiale de ravitaillement, plus particulièrement d'un module de commande qu'elle comporte à cet effet.

L'étape de transfert de fluide du procédé selon l'invention, de la réserve d'ergol de ravitaillement au réservoir de l'engin spatial, est de préférence également contrôlée depuis la station spatiale de ravitaillement, plus spécifiquement par un module de gestion de transfert de fluide, disposé dans le corps principal, qu'elle comporte à cet effet. Ce module de gestion de transfert de fluide commande notamment les différentes vannes, pompes, etc., disposées sur le trajet de circulation du fluide depuis la réserve d'ergol de ravitaillement jusqu'au réservoir de l'engin spatial, en fonction notamment de données provenant de l'engin spatial.

L'étape de transfert de fluide peut aussi bien être réalisée de manière passive que de manière active.

Dans les modes de réalisation particulièrement préférés de l'invention dans lesquels la station spatiale de ravitaillement comporte plusieurs nanosatellites, chacun associé à au moins une canalisation fluidique flexible de ravitaillement, le procédé selon l'invention peut être mis en œuvre simultanément par plusieurs nanosatellites, chacun selon son propre agenda et son propre rythme, pour le ravitaillement simultané de plusieurs engins spatiaux.

Lorsque ses réserves d'ergol de ravitaillement sont arrivées aux limites basses compatibles du ravitaillement (quantité d'ergol inépuisable), la station spatiale de ravitaillement peut être réapprovisionnée par tout système de véhicule station-service classique en lui-même, de préférence stationné dans la même orbite. Ce réapprovisionnement peut être réalisée de manière usuelle, par amarrage du corps principal de la station spatiale à ce véhicule, liaison fluidique de la réserve d'ergol à réapprovisionner avec une cuve d'ergol du véhicule station-service, et transfert de fluide en direction de la réserve d'ergol de la station spatiale de ravitaillement. Autrement, il peut être réalisé en mettant en œuvre un nanosatellite de la station spatiale et la canalisation fluidique flexible associée, connectée au circuit fluidique de la réserve d'ergol à réapprovisionner. Ce nanosatellite est alors déployé depuis le corps principal de la station spatiale et ancré au véhicule station-service de sorte à réaliser la liaison fluidique de la réserve d'ergol à réapprovisionner avec une cuve d'ergol du véhicule station-service, puis le transfert de fluide en direction de cette réserve d'ergol, par l'intermédiaire de la canalisation fluidique flexible. Ce nanosatellite et la canalisation fluidique flexible associée peuvent être dédiés à ce réapprovisionnement, ou être ceux qui sont normalement utilisés pour le ravitaillement d'engins spatiaux depuis la réserve d'ergol de ravitaillement de la station spatiale. Dans ce dernier cas, ils sont alors configurés pour permettre une circulation de fluide dans les deux sens au sein de la canalisation fluidique flexible.

Alternativement, la réserve d'ergol à niveau bas en ergol de la station spatiale peut être remplacée, au niveau du corps principal, par une réserve pleine.

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 7, dans lesquelles :
La figure 1 représente de manière schématique une station spatiale de ravitaillement conforme à l'invention.
La figure 2 représente une vue en perspective d'un nanosatellite de la station spatiale de ravitaillement de la figure 1.
La figure 3 représente un diagramme en blocs illustrant les différentes étapes d'un procédé selon l'invention de ravitaillement d'un engin spatial en orbite.
La figure 4 illustre une étape initiale d'un exemple de procédé selon l'invention pour le ravitaillement d'un engin spatial en orbite, au moyen d'une station spatiale de ravitaillement conforme à l'invention.
La figure 5 illustre des étapes suivantes de ce procédé.
La figure 6 illustre de manière schématique un exemple des étapes de liaison fluidique entre la station spatiale de ravitaillement et l'engin spatial, pour le ravitaillement dudit engin spatial en ergols, lors de la mise en œuvre de ce procédé.
La figure 7 illustre des étapes finales de ce procédé.

On notera que les figures ne sont pas à l'échelle, certains éléments ayant été volontairement grossis par rapport à d'autres pour permettre une meilleure compréhension de l'invention.

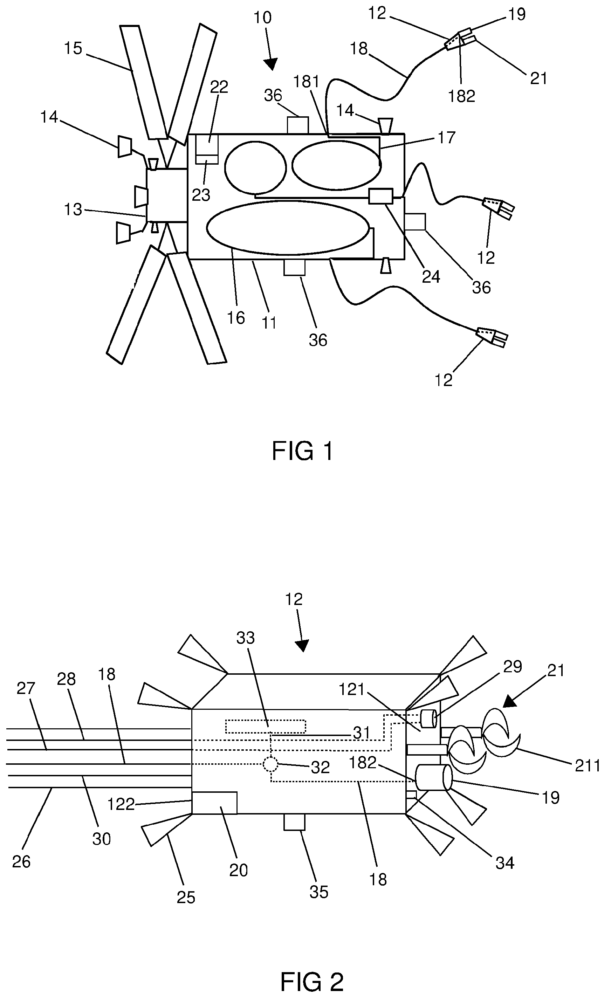

Un exemple de station spatiale de ravitaillement 10 conforme à l'invention, destinée au ravitaillement en ergol(s) d'un engin spatial en orbite autour d'un corps céleste, est représenté de manière schématique sur la figure 1.

Cette station spatiale comporte un corps principal 11 et une pluralité de nanosatellites 12.

Le corps principal 11 porte un premier module de propulsion 13, muni de tuyères 14, pour la réalisation de ses déplacements et son maintien à poste. Dans l'exemple de réalisation montré sur la figure, ces tuyères sont au nombre de sept, un tel nombre n'étant nullement limitatif de l'invention. Ce premier module de propulsion 13 est associé à une cuve, non représentée sur la figure, contenant les ergols nécessaires à son fonctionnement.

Le corps principal 11 porte également des panneaux solaires 15, classiques en eux-mêmes, pour son alimentation électrique.

Il porte également tous les systèmes embarqués classiques nécessaires à son fonctionnement autonome.

La station spatiale 10 comporte, au niveau du corps principal 11, au moins une réserve d'ergol de ravitaillement 16. Dans le mode de réalisation particulier représenté sur la figure, ces réserves d'ergol de ravitaillement 16 sont au nombre de trois, un tel nombre n'étant nullement limitatif de l'invention. Chaque réserve d'ergol de ravitaillement 16 est reliée à un circuit fluidique de ravitaillement 17. Dans cet exemple de réalisation, chaque réserve d'ergol 16 est reliée à un seul circuit fluidique 17, et chaque circuit fluidique 17 est relié à une seule réserve d'ergol 16. Chaque réserve d'ergol 16 peut autrement être reliée à plusieurs circuits fluidiques 17, et/ou chaque circuit fluidique 17 peut être relié à plusieurs réserves d'ergol 16, selon toute combinaison possible. Dans de tels cas, les circuits fluidiques 17 sont équipés de vannes multivoies, pour leur connexion fluidique avec l'une ou l'autre des réserves d'ergol 16.

Chaque circuit fluidique 17 est connecté à au moins une canalisation fluidique flexible 18, dite de ravitaillement, au niveau d'une première extrémité 181 de cette canalisation. La canalisation fluidique flexible 18 est équipée, à une deuxième extrémité opposée 182, d'un connecteur fluidique 19, fixé à un nanosatellite 12. Dans l'exemple de réalisation représenté sur la figure, une seule canalisation fluidique flexible 18 est ainsi associée à chaque nanosatellite 12. Dans des variantes de l'invention, un même nanosatellite 12 peut être associé à plusieurs canalisations fluidiques flexibles 18, chacune connectée à un circuit fluidique de ravitaillement 17 différent.

Les canalisations fluidiques flexibles 18 sont mobiles en extension et en torsion à l'extérieur du corps principal 11. Elles présentent de préférence une longueur de plusieurs dizaines de mètres, par exemple d'environ 50 m. Ainsi, comme montré sur la figure, elles sont aptes à s'étendre, par leur deuxième extrémité 182, à l'extérieur du corps principal 11, à distance de ce dernier.

Chaque nanosatellite 12 comporte un module de propulsion qui lui est propre, dit deuxième module de propulsion 20, visible sur la figure 2. Il comporte en outre un système 21 d'ancrage réversible à l'engin spatial à ravitailler.

La station spatiale de ravitaillement 10 comporte en outre un module de commande 22, pour la commande du fonctionnement des différents systèmes portés par le corps principal 11, ainsi que du fonctionnement des nanosatellites 12. Ce module de commande 22 comporte un module 23 de gestion de transfert de fluide des réserves d'ergol 16 aux connecteurs fluidiques 19, jusqu'à l'engin spatial à ravitailler. Un tel transfert de fluide peut être opéré par un système de transfert de fluide que comporte à cet effet la station spatiale de ravitaillement 10. Ce système de transfert de fluide comprend différentes vannes, dont l'ouverture, la fermeture et le débit sont commandés par le module 23 de gestion de transfert de fluide. Ces vannes peuvent être disposés sur les circuits fluidiques 17 et sur les canalisations fluidiques flexibles 18. Le système de transfert de fluide peut également optionnellement comporter une ou plusieurs pompes, commandées par le module 23 de gestion du transfert de fluide, pour la réalisation d'un transfert de fluide actif. A titre d'exemple, une telle pompe 24 a été représentée sur la figure 1, sur un des circuits fluidiques 17.

Le module de commande 22 est classique en lui-même. Il comporte par exemple au moins un processeur et au moins une mémoire électronique dans laquelle est mémorisé un produit programme d'ordinateur, sous la forme d'un ensemble d'instructions de code de programme à exécuter pour mettre en œuvre les différentes étapes d'un procédé de commande des différents systèmes embarqués sur le corps principal 11, des nanosatellites 12 et du système de transfert de fluide. Dans une variante, le module de commande comporte également un ou des circuits logiques programmables, de type FPGA, PLD, etc., et/ou circuits intégrés spécialisés (ASIC) adaptés à mettre en œuvre tout ou partie desdites étapes de ce procédé de commande. En d'autres termes, le module de commande comporte un ensemble de moyens configurés de façon logicielle (produit programme d'ordinateur spécifique) et/ou matérielle (FPGA, PLD, ASIC, etc.) pour mettre en œuvre les différentes étapes de ce procédé de commande.

Un nanosatellite 12, et les éléments qui lui sont liés, sont représentés de manière plus détaillée sur la figure 2.

Ce nanosatellite 12 comporte, comme indiqué ci-avant, le deuxième module de propulsion 20, le connecteur fluidique 19 et le système d'ancrage réversible 21. Ces éléments sont de préférence tous disposés sur une même face du nanosatellite, dite face avant 121. Cette face avant est destinée à se trouver en regard de l'engin spatial à ravitailler lors la réalisation du ravitaillement.

Le deuxième module de propulsion 20 peut être de tout type classique en lui-même. Il comporte par exemple un ensemble de tuyères 25, en nombre et positions adéquats pour permettre ses déplacements en translation et en rotation.

Le système d'ancrage réversible 21 peut également être de tout type classique en lui-même. Il s'agit par exemple, comme illustré sur la figure 2, d'un système d'ancrage mécanique, au moyens de pinces 211 aptes à s'engager dans des organes coopérants portés par l'engin spatial à ravitailler.

Le nanosatellite 12 est relié au corps principal 11 de la station spatiale de ravitaillement 10 par un tube ombilical flexible 26, mobile en extension et en torsion à l'extérieur de ce corps principal. Ce tube ombilical 26 est de préférence fixé au niveau d'une face arrière 122 du nanosatellite 12, opposée à sa face avant 121. La canalisation fluidique flexible 18 s'étend à l'intérieur de de ce tube ombilical 26. Elle se prolonge à l'intérieur du nanosatellite 12, pour déboucher par sa deuxième extrémité 182 dans la face avant 121 du nanosatellite, au niveau du connecteur fluidique 19.

Le tube ombilical 26 peut également par exemple contenir :
- une ligne de télémétrie 27 et une ligne de télécommande 28 reliant le module de commande 22 aux différents systèmes embarqués du nanosatellite 12 ainsi qu'à une interface de communication 29 disposée sur la face avant 121 du nanosatellite 12 et destinée à assurer la communication avec l'engin spatial à ravitailler lorsque celui-ci est ancré au nanosatellite 12 ;
- un câble électrique 30 assurant l'alimentation électrique du nanosatellite 12 depuis le corps principal 11 ;
- un conduit 31 d'alimentation en ergols du deuxième module de propulsion 20 depuis le corps principal 11, par exemple depuis la cuve d'ergols (non représentée sur le figures) alimentant le premier module de propulsion 13 ou depuis une réserve d'ergols de ravitaillement 16.

Dans le mode de réalisation particulier représenté sur la figure 2, le conduit d'alimentation 31 se confond pour partie avec la canalisation fluidique flexible 18. Ainsi, dans ce mode de réalisation, l'alimentation en ergols du nanosatellite 12 s'effectue depuis une réserve d'ergols de ravitaillement 16, dans un premier temps via la canalisation fluidique flexible 18. Au niveau du nanosatellite 12, cette dernière est pourvue d'une vanne multivoies 32, dont une sortie oriente le fluide vers une partie terminale de la canalisation fluidique flexible 18 se prolongeant jusqu'au niveau du connecteur fluidique 19, et une autre sortie oriente le fluide vers une partie terminale du conduit d'alimentation 31. Le conduit d'alimentation 31 peut déboucher dans un réservoir d'ergols 33 du nanosatellite 12, depuis lequel est alimenté le deuxième module de propulsion 20.

Un tel mode de réalisation n'est toutefois nullement limitatif de l'invention, et le conduit d'alimentation 31 peut par exemple être entièrement distinct de la canalisation fluidique flexible 18. Dans une variante de l'invention, il alimente directement le deuxième module de propulsion 20, le nanosatellite 12 étant alors dépourvu de réservoir d'ergol(s).

Le nanosatellite 12 comporte également, au niveau de la face avant 121, un capteur de rendez-vous 34 pour la réalisation des étapes de rendez-vous avec l'engin spatial à ravitailler. Ce capteur de rendez-vous 34 peut être de tout type classique en lui-même.

Le nanosatellite 12 et le corps principal 11 peuvent en outre être pourvus de moyens d'arrimage réversible coopérants, respectivement désignés par les références 35 et 36 sur les figures 1 et 2, pour l'arrimage du nanosatellite 12 au corps principal 11 en mode inactif du nanosatellite, entre deux missions de ravitaillement. Ces moyens d'arrimage réversible coopérants 35, 36 sont de préférence de type mécanique.

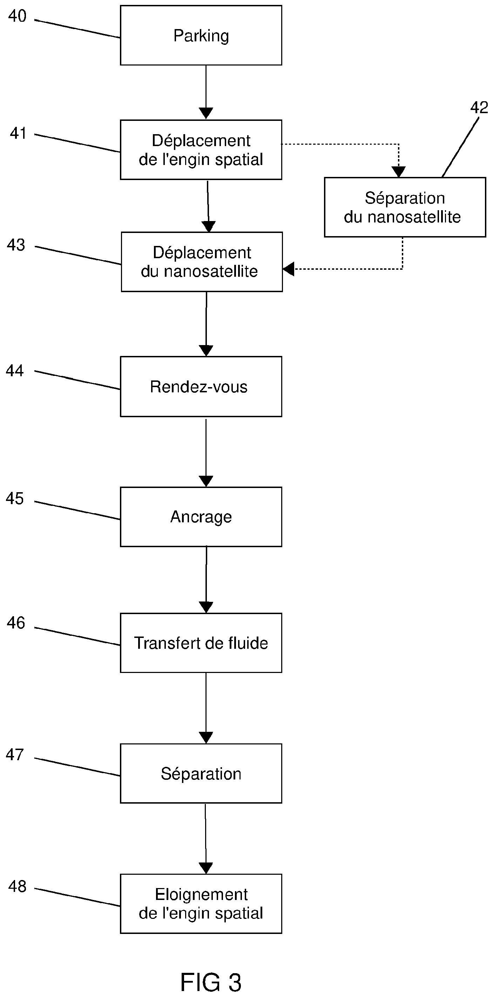

La station spatiale de ravitaillement 10 selon l'invention peut être utilisée pour le ravitaillement dans l'espace d'un engin spatial à ravitailler en ergol(s), l'un comme l'autre étant disposés dans une même orbite autour d'un corps céleste. Les principales étapes d'un procédé pour un tel ravitaillement, conforme à l'invention, sont montrées sur la figure 3.

La station spatiale de ravitaillement est stationnée en position de parking 40 dans l'orbite souhaitée, dans l'attente de remplir une mission de ravitaillement.

Le procédé de ravitaillement comprend une étape préalable de déplacement 41 de l'engin spatial à proximité du corps principal 11 de la station spatiale de ravitaillement 10. On entend par là que l'engin spatial se positionne à une distance de ce corps principal 11 la plus longue possible, tout en étant inférieure à la longueur de la canalisation fluidique flexible 18, de sorte à pouvoir être atteint par la face avant 121 du nanosatellite 12.

Toutes les opérations réalisées ensuite par le nanosatellite 12 sont commandées par le module de commande 22, qui commande notamment le deuxième module de propulsion 20, le système d'ancrage réversible 21 et le connecteur fluidique 19, en fonction notamment de données fournies par le capteur de rendez-vous 34 et l'interface 29 de communication avec l'engin spatial 50.

Optionnellement, lorsque le nanosatellite 12 devant accomplir la mission de ravitaillement est arrimé au corps principal 11, le procédé comprend une étape 42 de séparation du nanosatellite 12 et du corps principal 11.

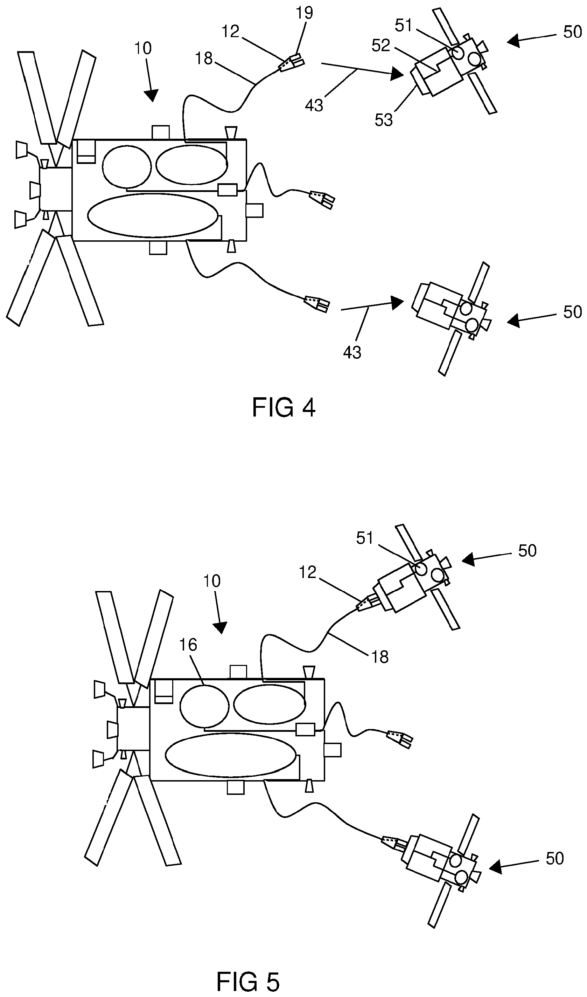

On obtient alors la configuration illustrée sur la figure 4. Sur cette figure, on a représenté à titre d'exemple deux engins spatiaux 50 à ravitailler.

Chacun de ces engins spatiaux 50 comporte un réservoir 51, à réapprovisionner en ergol(s) pour l'alimentation de ses moyens de propulsion. Le réservoir 51 est relié à un circuit fluidique 52, qui est lui-même équipé, sur une face dite arrière 53 de l'engin spatial, qui est la face destinée à être en regard de la face avant 121 du nanosatellite 12 lors des opérations de ravitaillement, d'un connecteur fluidique (non représenté sur la figure 4) apte à coopérer avec le connecteur fluidique 19 du nanosatellite 12 pour réaliser une liaison fluidique étanche entre la canalisation fluidique flexible 18 et le réservoir 51 de l'engin spatial 50.

L'étape suivante du procédé est le déplacement 43 du nanosatellite 12 en direction de l'engin spatial 50, comme illustré en 43 sur la figure 4.

Lorsque le nanosatellite 12 est parvenu à une distance proche de l'engin spatial 50, le procédé comporte une étape de rendez-vous 44 du nanosatellite 12 avec l'engin spatial 50. Cette étape peut être réalisée de toute manière classique en elle-même, au moyen du capteur de rendez-vous 34 du nanosatellite. L'intelligence du rendez-vous est de préférence gérée par le module de commande 22, depuis le corps principal 11 de la station spatiale 10. L'engin spatial 50, selon sa configuration, peut rester passif, ou participer de manière active à cette étape de rendez-vous.

Le procédé selon l'invention comprend ensuite une étape 45 d'ancrage du nanosatellite 12 à l'engin spatial 50, par le système d'ancrage réversible 21 qu'il porte sur sa face avant 121. Cet ancrage est réalisé au niveau de la face arrière 53 de l'engin spatial 50, et de préférence de telle sorte qu'il réalise également, de manière automatique :
- la connexion fluidique du connecteur fluidique 19 avec le connecteur fluidique coopérant de l'engin spatial 50,
- et/ou la connexion de l'interface de communication 29 avec le système de contrôle et de commande de l'engin spatial 50.

On obtient à l'issue de cette étape la configuration montrée sur la figure 5, dans laquelle les nanosatellites 12 sont ancrés aux engins spatiaux 50 qu'ils doivent respectivement ravitailler.

Le procédé selon l'invention comprend ensuite une étape 46 de transfert de fluide d'une réserve d'ergol de ravitaillement 16 de la station spatiale 10 au réservoir 51 de l'engin spatial 50. Cette étape est de préférence commandée depuis le module de commande 22 de la station spatiale 10, plus particulièrement depuis le module 23 de gestion du transfert de fluide qu'il contient. A cet effet, le module de commande 22 envoie des signaux de commande aux différents composants du système de transfert de fluide, c'est-à-dire aux vannes, pompes, etc., situées sur le trajet de circulation du fluide entre la réserve d'ergol de ravitaillement 16 et le réservoir 51 de l'engin spatial 50, en particulier par la ligne de télécommande 28 et l'interface de communication 29 pour les signaux destinés à la commande de composants situés dans l'engin spatial 50. Ces signaux de commande sont notamment déterminés en fonction d'informations reçues de l'engin spatial 50 par l'interface de communication 29 et la ligne de télémétrie 27, notamment concernant le niveau de remplissage du réservoir 51 à réapprovisionner.

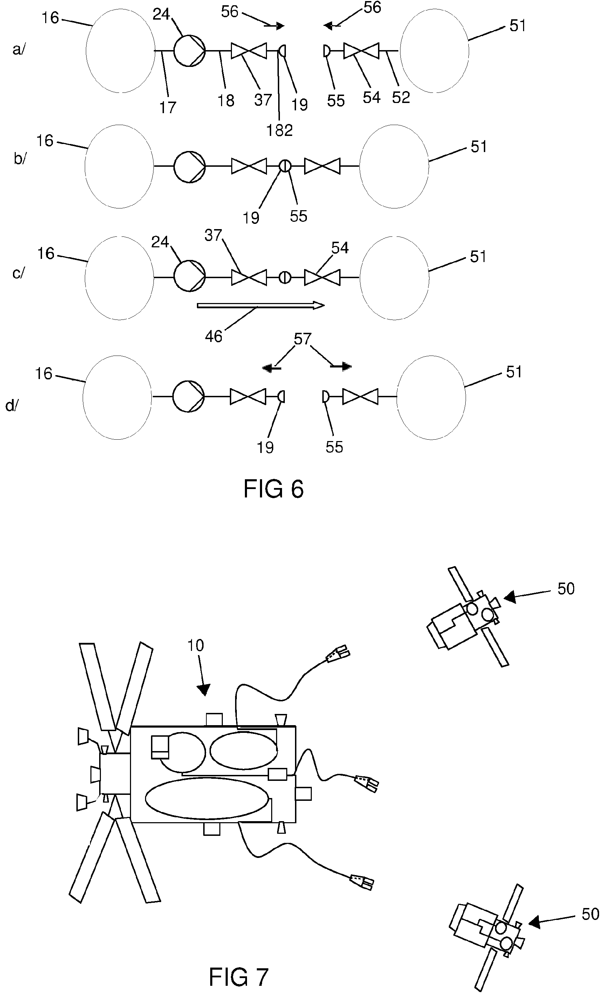

La figure 6 illustre de manière schématique un exemple d'une architecture fluidique de l'ensemble formé par la station spatiale 10 et un engin spatial 50 à ravitailler. Elle comporte, comme montré en a/, côté station spatiale, une réserve d'ergol de ravitaillement 16, reliée à un circuit fluidique de ravitaillement 17 lui-même connecté de manière fluidique à une canalisation fluidique flexible 18. Le circuit fluidique 17 est muni d'une pompe 24, apte à entrainer un fluide en circulation depuis la réserve d'ergol 16, par la canalisation fluidique flexible 18, jusqu'au connecteur fluidique 19. A titre d'exemple, une vanne 37 peut être montée sur cette dernière. A sa deuxième extrémité 182, la canalisation fluidique flexible 18 est équipée du connecteur fluidique 19. Côté engin spatial, le réservoir 51 à ravitailler est relié à un circuit fluidique 52, lui-même connecté de manière fluidique à un connecteur fluidique dit coopérant 55. Une vanne 54 est représentée à titre d'exemple sur circuit fluidique 52. Dans la position montrée en a/ sur la figure, le connecteur fluidique 19 et le connecteur fluidique coopérant 55 sont éloignés l'un de l'autre. Lors de l'étape 43 de déplacement du nanosatellite du procédé selon l'invention, ils se déplacent l'un vers l'autre, comme indiqué en 56 sur la figure.

Consécutivement à l'étape d'ancrage 45 du procédé, le connecteur fluidique 19 et le connecteur fluidique coopérant 55 se connectent de manière fluidique l'un à l'autre, comme montré en b/ sur la figure 6.

L'étape 46 de transfert de fluide du procédé peut alors être réalisée. A cet effet, les vannes 37 et 54 sont ouvertes, de préférence sous la commande du module de commande 22, et la pompe 24 est actionnée pour entrainer le fluide contenu dans la réserve d'ergol de ravitaillement 16 en circulation, selon la direction indiquée en 46 en c/ sur la figure, jusqu'au réservoir 51. Lorsque le module de commande 22 reçoit l'information que le réservoir 51 est suffisamment rempli, il commande l'arrêt de la pompe 24 et la fermeture des vannes 37 et 54.

Une fois le transfert de fluide effectué, le procédé selon l'invention comporte une étape 47 de séparation du nanosatellite 12 et de l'engin spatial 50, par libération du système d'ancrage réversible 21, et une étape 48 d'éloignement de l'engin spatial 50 et du nanosatellite 12. Cette étape est illustrée en d/ sur la figure 6. Le connecteur fluidique 19 et le connecteur fluidique coopérant 55 sont déconnectés l'un de l'autre, et s'éloignent en directions opposées, comme illustré en 57.

On obtient à l'issue de ces étapes la configuration montrée sur la figure 7, dans laquelle les engins spatiaux ravitaillés 50 sont séparés de la station spatiale de ravitaillement 10, et peuvent se déplacer vers leur zone de mission. La station spatiale de ravitaillement 10 se retrouve quant à elle en position initiale, prête à réaliser d'autres missions de ravitaillement.

Comme exposé ci-avant, ce procédé peut être réalisé simultanément par une pluralité de nanosatellites 12 d'une même station spatiale de ravitaillement 10, pour la réalisation simultanée de plusieurs missions de ravitaillement d'engins spatiaux 50.

## Revendications

1. Station spatiale de ravitaillement (10) pour le ravitaillement en ergol(s) d'un engin spatial (50) comprenant au moins un réservoir (51), tous deux en orbite autour d'un corps céleste, ladite station spatiale de ravitaillement (10) comportant un corps principal (11) portant un premier module de propulsion (13), et comportant :
- au niveau dudit corps principal (11), au moins une réserve d'ergol de ravitaillement (16) reliée à un circuit fluidique de ravitaillement (17),
- une canalisation fluidique flexible (18) connectée à une première extrémité (181) en sortie dudit circuit fluidique de ravitaillement (17) et équipée à une deuxième extrémité (182) d'un connecteur fluidique (19) pour la liaison fluidique étanche de ladite canalisation fluidique flexible (18) audit réservoir (51) de l'engin spatial (50), ladite canalisation fluidique flexible (18) étant mobile en extension et en torsion à l'extérieur dudit corps principal (11) de la station spatiale de ravitaillement (10),
- et un système de transfert de fluide de ladite réserve d'ergol de ravitaillement (16) audit réservoir (51) de l'engin spatial (50), par ladite canalisation fluidique flexible (18),
ladite station spatiale de ravitaillement (10) étant **caractérisée en ce que** :
- elle comporte un nanosatellite (12) portant ledit connecteur fluidique (19) équipant la deuxième extrémité (182) de la canalisation fluidique flexible (18), et comportant un deuxième module de propulsion (20) indépendant dudit premier module de propulsion (13), un capteur de rendez-vous (34) et un système (21) d'ancrage réversible à l'engin spatial (50) dans une position déterminée dans laquelle ledit connecteur fluidique (19) est apte à réaliser une liaison fluidique étanche avec ledit réservoir (51) de l'engin spatial (50),
- et ledit système de transfert de fluide de ladite réserve d'ergol de ravitaillement (16) audit réservoir (51) de l'engin spatial (50), par ladite canalisation fluidique flexible (18), est opérable lorsque ledit nanosatellite (12) est ancré audit engin spatial (50) par ledit système d'ancrage réversible (21) et que ledit connecteur fluidique (19) réalise une liaison fluidique étanche avec ledit réservoir (51) de l'engin spatial (50).

2. Station spatiale de ravitaillement selon la revendication 1, comprenant une ligne de télémétrie (27) et/ou une ligne de télécommande (28) assurant une liaison de communication entre ledit corps principal (11) et ledit nanosatellite (12), ledit nanosatellite (12) comprenant en outre une interface (29) de communication avec l'engin spatial (50) pour la réception de données représentatives du niveau de remplissage dudit réservoir (51) de l'engin spatial (50).

3. Station spatiale de ravitaillement selon la revendication 2, comprenant en outre, dans ledit corps principal (11), un module (22) de commande du deuxième module de propulsion (20), du système d'ancrage réversible (21) et du connecteur fluidique (19), ledit module de commande (22) étant programmé pour émettre des signaux de commande en fonction des données fournies par le capteur de rendez-vous (34) et l'interface (29) de communication avec ledit engin spatial (50).

4. Station spatiale de ravitaillement selon l'une quelconque des revendications 1 à 3, dans laquelle ledit système d'ancrage réversible (21) et ledit connecteur fluidique (19) sont configurés de sorte que l'ancrage dudit nanosatellite (12) audit engin spatial (50) réalise également la liaison fluidique étanche de ladite canalisation fluidique flexible (18) avec ledit réservoir (51) de l'engin spatial (50).

5. Station spatiale de ravitaillement selon l'une quelconque des revendications 1 à 4, comprenant un câble électrique (30) assurant une alimentation électrique entre ledit corps principal (11) et ledit nanosatellite (12).

6. Station spatiale de ravitaillement selon l'une quelconque des revendications 1 à 5, dans laquelle ladite canalisation fluidique flexible (18), et le cas échéant ledit câble électrique (30), ladite ligne de télémétrie (27) et/ou ladite ligne de télécommande (28), sont contenus dans un tube ombilical flexible (26) fixé à une première extrémité audit corps principal (11) et à une deuxième extrémité audit nanosatellite (12).

7. Station spatiale de ravitaillement selon l'une quelconque des revendications 1 à 6, dans laquelle ledit nanosatellite (12) et ledit corps principal (11) sont équipés de moyens d'arrimage coopérants (35, 36) pour l'arrimage réversible dudit nanosatellite (12) audit corps principal (11).

8. Station spatiale de ravitaillement selon l'une quelconque des revendications 1 à 7, comportant un conduit (31) d'alimentation en ergol(s) dudit deuxième module de propulsion (20) du nanosatellite (12) depuis ledit corps principal (11), ledit nanosatellite (12) étant dépourvu de réservoir à ergols.

9. Station spatiale de ravitaillement selon l'une quelconque des revendications 1 à 8, comprenant un module (23) de gestion du transfert de fluide de ladite réserve d'ergol de ravitaillement (16) audit réservoir (51) de l'engin spatial (50), disposé dans ledit corps principal (11).

10. Station spatiale de ravitaillement selon l'une quelconque des revendications 1 à 9, dans laquelle ledit système de transfert de fluide comprend une pompe (24) de circulation de fluide dans ladite canalisation fluidique flexible (18).

11. Station spatiale de ravitaillement selon l'une quelconque des revendications 1 à 10, comportant une pluralité de réserves d'ergol de ravitaillement (16) portées par ledit corps principal (11).

12. Station spatiale de ravitaillement selon l'une quelconque des revendications 1 à 11, comportant une pluralité de nanosatellites (12) tels que définis dans l'une des revendications 1 à 11, chacun étant associé à une canalisation fluidique flexible (18) telle que définie dans l'une des revendications 1 à 11, et, pour chaque couple nanosatellite (12) / canalisation fluidique flexible (18), un système de transfert de fluide d'une réserve d'ergol de ravitaillement (16) portée par le corps principal (11) au réservoir (51) d'un engin spatial (50), par ladite canalisation fluidique flexible (18), opérable lorsque ledit nanosatellite (12) est ancré audit engin spatial (50) par ledit système d'ancrage réversible (21) et le connecteur fluidique (19) de ladite canalisation fluidique flexible (18) réalise une liaison fluidique étanche avec le réservoir (51) dudit engin spatial (50).

13. Ensemble comprenant au moins une station spatiale de ravitaillement (10) et un engin spatial (50) tels que définis dans l'une quelconque des revendications 1 à 12.

14. Procédé de ravitaillement en ergol(s) d'un engin spatial (50) en orbite autour d'un corps céleste, au moyen d'un station spatiale de ravitaillement (10) selon l'une quelconque des revendications 1 à 12 positionnée dans ladite orbite à proximité dudit engin spatial (50), ledit engin spatial (50) comprenant au moins un réservoir (51), ledit procédé comprenant des étapes de :
- le cas échéant, séparation (42) du nanosatellite (12) du corps principal (11) de la station spatiale de ravitaillement (10),
- déplacement (43) du nanosatellite (12) en direction de l'engin spatial (50),
- rendez-vous (44) du nanosatellite (12) avec l'engin spatial (50),
- ancrage (45) du nanosatellite (12) à l'engin spatial (50), et liaison fluidique étanche du connecteur fluidique (19) de la canalisation fluidique flexible (18) porté par le nanosatellite (12) au réservoir (51) de l'engin spatial (50),
- transfert de fluide (46) de la réserve d'ergol de ravitaillement (16) du corps principal (11) de la station spatiale de ravitaillement (10) au réservoir (51) de l'engin spatial (50), par la canalisation fluidique flexible (18),
- et séparation (47) du nanosatellite (12) et de l'engin spatial (50).

15. Procédé selon la revendication 14, selon lequel ledit nanosatellite (12) est commandé par un module de commande (22) disposé dans ledit corps principal (11) de la station spatiale de ravitaillement (10), des signaux de commande étant successivement déterminés et envoyés audit nanosatellite (12) par ledit module de commande (22) pour la réalisation des étapes de déplacement (43), rendez-vous (44), ancrage (45) à l'engin spatial (50) et séparation (47) de l'engin spatial (50).

16. Procédé selon la revendication 14 ou 15, selon lequel l'étape de transfert de fluide (46) est contrôlée par un module de gestion du transfert de fluide (23) disposé dans le corps principal (11) de la station spatiale de ravitaillement (10).

## Patentansprüche

1. Raumbetankungsstation (10) zum Betanken eines Raumfahrzeugs (50) mit Treibstoffen, das mindestens einen Tank (51) umfasst, beide in der Umlaufbahn um einen Himmelskörper, wobei die Raumbetankungsstation (10) einen Hauptkörper (11) aufweist, der ein erstes Antriebsmodul (13) trägt, und Folgendes aufweist:
- mindestens einen Betankungstreibstoffvorrat (16) an dem Hauptkörper (11), der mit einem Fluidbetankungskreislauf (17) verbunden ist,
- eine flexible Fluidleitung (18), die an einem ersten Ende (181) am Ausgang des Fluidbetankungskreislaufs (17) angeschlossen und an einem zweiten Ende (182) mit einem Fluidanschluss (19) für die dichte Fluidverbindung der flexiblen Fluidleitung (18) mit dem Tank (51) des Raumfahrzeugs (50) ausgestattet ist, wobei die flexible Fluidleitung (18) sich ausfahrend und verdrehend außerhalb des Hauptkörpers (11) der Raumbetankungsstation (10) bewegen kann,
- und ein System zum Transfer von Fluid aus dem Betankungstreibstoffvorrat (16) des Tanks (51) des Raumfahrzeugs (50) durch die flexible Fluidleitung (18),
wobei die Raumbetankungsstation (10) **dadurch gekennzeichnet ist, dass**:
- sie einen Nanosatelliten (12), der den Fluidanschluss (19) trägt, der das zweite Ende (182) der flexiblen Fluidleitung (18) ausstattet, und ein zweites Antriebsmodul (20) aufweist, das von dem ersten Antriebsmodul (13) unabhängig ist, einen Terminsensor (34) und ein System (21) zur umkehrbaren Verankerung an dem Raumfahrzeug (50) in einer bestimmten Position, in der der Fluidanschluss (19) ausgelegt ist, um eine dichte Fluidverbindung mit dem Tank (51) des Raumfahrzeugs (50) herzustellen,
- und wobei das Fluidtransfersystem des Betankungstreibstoffvorrats (16) mit dem Tank (51) des Raumfahrzeugs (50) durch die flexible Fluidleitung (18) betriebsbereit ist, wenn der Nanosatellit (12) durch das umkehrbare Verankerungssystem (21) an dem Raumfahrzeug (50) verankert ist und der Fluidanschluss (19) eine dichte Fluidverbindung mit dem Tank (51) des Raumfahrzeugs (50) herstellt.

2. Raumbetankungsstation nach Anspruch 1, umfassend eine Telemetrieleitung (27) und/oder eine Fernbedienungsleitung (28), die eine Kommunikationsverbindung zwischen dem Hauptkörper (11) und dem Nanosatelliten (12) gewährleistet, wobei der Nanosatellit (12) ferner eine Schnittstelle (29) zur Kommunikation mit dem Raumfahrzeug (50) zum Empfang von Daten umfasst, die den Füllstand des Tanks (51) des Raumfahrzeugs (50) darstellen.

3. Raumbetankungsstation nach Anspruch 2, ferner umfassend in dem Hauptkörper (11) ein Modul (22) zur Steuerung des zweiten Antriebsmoduls (20), des umkehrbaren Verankerungssystems (21) und des Fluidanschlusses (19), wobei das Steuermodul (22) so programmiert ist, dass es Steuersignale in Abhängigkeit von den von dem Terminsensor (34) und der Schnittstelle (29) zur Kommunikation mit dem Raumfahrzeug (50) bereitgestellten Daten ausgibt.

4. Raumbetankungsstation nach einem der Ansprüche 1 bis 3, wobei das umkehrbare Verankerungssystem (21) und der Fluidanschluss (19) so ausgebildet sind, dass die Verankerung des Nanosatelliten (12) an dem Raumfahrzeug (50) auch die dichte Fluidverbindung der flexiblen Fluidleitung (18) mit dem Tank (51) des Raumfahrzeugs (50) herstellt.

5. Raumbetankungsstation nach einem der Ansprüche 1 bis 4, umfassend ein elektrisches Kabel (30), das eine Stromversorgung zwischen dem Hauptkörper (11) und dem Nanosatelliten (12) gewährleistet.

6. Raumbetankungsstation nach einem der Ansprüche 1 bis 5, wobei die flexible Fluidleitung (18) und gegebenenfalls das elektrische Kabel (30), die Telemetrieleitung (27) und/oder die Fernbedienungsleitung (28) in einem flexiblen Zufuhrschlauch (26) enthalten sind, der an einem ersten Ende des Hauptkörpers (11) und an einem zweiten Ende des Nanosatelliten (12) befestigt ist.

7. Raumbetankungsstation nach einem der Ansprüche 1 bis 6, wobei der Nanosatellit (12) und der Hauptkörper (11) mit kooperativen Andockmitteln (35, 36) für das umkehrbare Andocken des Nanosatelliten (12) an den Hauptkörper (11) ausgestattet sind.

8. Raumbetankungsstation nach einem der Ansprüche 1 bis 7, die eine Treibstoffversorgungsleitung (31) des zweiten Antriebsmoduls (20) des Nanosatelliten (12) von dem Hauptkörper (11) aus aufweist, wobei der Nanosatellit (12) über keine Treibstofftanks verfügt.

9. Raumbetankungsstation nach einem der Ansprüche 1 bis 8, umfassend ein Fluidtransfermanagementmodul (23) des Betankungstreibstoffvorrats (16) zu dem Tank (51) des Raumfahrzeugs (50), das in dem Hauptkörper (11) angeordnet ist.

10. Raumbetankungsstation nach einem der Ansprüche 1 bis 9, wobei das Fluidtransfersystem eine Pumpe (24) zur Umwälzung von Fluid in der flexiblen Fluidleitung (18) umfasst.

11. Raumbetankungsstation nach einem der Ansprüche 1 bis 10, die eine Vielzahl von von dem Hauptkörper (11) getragenen Betankungstreibstoffvorräten (16) aufweist.

12. Raumbetankungsstation nach einem der Ansprüche 1 bis 11, die eine Vielzahl von Nanosatelliten (12), wie in einem der Ansprüche 1 bis 11 definiert, aufweist, wobei jeder mit einer flexiblen Fluidleitung (18), wie in einem der Ansprüche 1 bis 11 definiert, verbunden ist, und für jedes Paar Nanosatellit (12)/flexible Fluidleitung (18) ein Fluidtransfersystem eines Betankungstreibstoffvorrats (16), der von dem Hauptkörper (11) zu dem Tank (51) eines Raumfahrzeugs (50) durch die flexible Fluidleitung (18) getragen wird, betrieben werden kann, wenn der Nanosatellit (12) durch das umkehrbare Verankerungssystem (21) an dem Raumfahrzeug (50) verankert ist und der fluidische Anschluss (19) der flexiblen Fluidleitung (18) eine dichte Fluidverbindung mit dem Tank (51) des Raumfahrzeugs (50) herstellt.

13. Baugruppe, die mindestens eine Raumbetankungsstation (10) und ein Raumfahrzeug (50) nach einem der Ansprüche 1 bis 12 umfasst.

14. Verfahren zum Betanken eines Raumfahrzeugs (50) in der Umlaufbahn um einen Himmelskörper mithilfe einer Raumbetankungsstation (10) nach einem der Ansprüche 1 bis 12, die in der Umlaufbahn in der Nähe des Raumfahrzeugs (50) positioniert ist, wobei das Raumfahrzeug (50) mindestens einen Tank (51) umfasst, wobei das Verfahren folgende Schritte umfasst:
- gegebenenfalls Trennung (42) des Nanosatelliten (12) von dem Hauptkörper (11) der Raumbetankungsstation (10),
- Bewegung (43) des Nanosatelliten (12) in Richtung des Raumfahrzeugs (50),
- Begegnung (44) des Nanosatelliten (12) mit dem Raumfahrzeug (50),
- Verankerung (45) des Nanosatelliten (12) an dem Raumfahrzeug (50) und dichte Fluidverbindung des Fluidanschlusses (19) der flexiblen Fluidleitung (18), die von dem Nanosatelliten (12) zu dem Tank (51) des Raumfahrzeugs (50) getragen wird,
- Fluidtransfer (46) aus dem Betankungstreibstoffvorrat (16) von dem Hauptkörper (11) der Raumstation (10) zu dem Tank (51) des Raumfahrzeugs (50) über die flexible Fluidleitung (18),
- und Trennung (47) des Nanosatelliten (12) und des Raumfahrzeugs (50).

15. Verfahren nach Anspruch 14, wobei der Nanosatellit (12) von einem Steuermodul (22) gesteuert wird, das in dem Hauptkörper (11) der Raumbetankungsstation (10) angeordnet ist, wobei Steuersignale nacheinander bestimmt und von dem Steuermodul (22) an den Nanosatelliten (12) gesendet werden, um die Schritte der Bewegung (43), Begegnung (44), Verankerung (45) an dem Raumfahrzeug (50) und Trennung (47) von dem Raumfahrzeug (50) durchzuführen.

16. Verfahren nach Anspruch 14 oder 15, wobei der Fluidtransferschritt (46) durch ein in dem Hauptkörper (11) der Raumbetankungsstation (10) angeordnetes Fluidtransfermanagementmodul (23) gesteuert wird.

## Claims

1. A supply space station (10) for supplying with propellant(s) a spacecraft (50) comprising at least one tank (51), both in orbit around a celestial body, said supply space station (10) comprising a main body (11) carrying a first propulsion module (13), and comprising:
- on said main body (11), at least one supply propellant reserve (16) connected to a fluidic supply circuit (17),
- a flexible fluid pipe (18) connected at a first end (181) to the outlet of said fluidic supply circuit (17) and equipped at a second end (182) with a fluidic connector (19) for the fluid-tight connection of said flexible fluid pipe (18) to said tank (51) of the spacecraft (50), said flexible fluid pipe (18) being mobile in extension and torsion outside said main body (11) of the supply space station (10),
- and a system for transferring fluid from said supply propellant reserve (16) to said tank (51) of the spacecraft (50), by said flexible fluid pipe (18),
said supply space station (10) being **characterized in that**:
- it comprises a nanosatellite (12) carrying said fluidic connector (19) equipping the second end (182) of the flexible fluid pipe (18), and comprising a second propulsion module (20) independent from said first propulsion module (13), a rendezvous sensor (34) and a reversible anchoring system (21) for reversibly anchoring to the spacecraft (50) in a determined position in which said fluidic connector (19) is capable of establishing a fluid-tight connection with said tank (51) of the spacecraft (50),
- and said system for transferring fluid from said supply propellant reserve (16) to said tank (51) of the spacecraft (50), via said flexible fluid pipe (18), is operable when said nanosatellite (12) is anchored to said spacecraft (50) by said reversible anchoring system (21) and said fluidic connector (19) establishes a fluid-tight connection with said tank (51) of the spacecraft (50).

2. The supply space station according to claim 1, comprising a telemetry line (27) and/or a remote control line (28) providing a communication link between said main body (11) and said nanosatellite (12), said nanosatellite (12) further comprising an interface (29) of communication with the spacecraft (50) for receiving representative data of the filling level of said tank (51) of the spacecraft (50).

3. The supply space station according to claim 2, further comprising, in said main body (11), a module (22) for controlling the second propulsion module (20), the reversible anchoring system (21) and the fluidic connector (19), said control module (22) being programmed to transmit control signals according to the data provided by the rendezvous sensor (34) and the interface (29) of communication with said spacecraft (50).

4. The supply space station according to any one of claims 1 to 3, wherein said reversible anchoring system (21) and said fluidic connector (19) are configured such that the anchoring of said nanosatellite (12) to said spacecraft (50) also establishes the fluid-tight connection of said flexible fluid pipe (18) to said tank (51) of the spacecraft (50).

5. The supply space station according to any of claims 1 to 4, comprising an electrical cable (30) providing an electrical power supply between said main body (11) and said nanosatellite (12).

6. The supply space station according to any of claims 1 to 5, wherein said flexible fluid pipe (18), and where applicable said electrical cable (30), said telemetry line (27) and/or said remote control line (28), are contained in a flexible umbilical tube (26) attached at a first end to said main body (11) and at a second end to said nanosatellite (12).

7. The supply space station according to any of claims 1 to 6, wherein said nanosatellite (12) and said main body (11) are equipped with cooperating docking means (35, 36) for reversibly docking said nanosatellite (12) to said main body (11).

8. The supply space station according to any of claims 1 to 7, comprising a duct (31) for supplying said second propulsion module (20) of the nanosatellite (12) with propellant(s) from said main body (11), said nanosatellite (12) being devoid of a propellant tank.

9. The supply space station according to any of claims 1 to 8, comprising a module (23) for managing the transfer of fluid from said propellant resupply store (16) to said tank (51) of the spacecraft (50), disposed in said main body (11).

10. The supply space station according to any of claims 1 to 9, wherein said fluid transfer system comprises a pump (24) for circulating fluid in said flexible fluid pipe (18).

11. The supply space station according to any of claims 1 to 10, comprising a plurality of supply propellant reserves (16) carried by said main body (11).

12. The supply space station according to any one of claims 1 to 11, comprising a plurality of nanosatellites (12) as defined in any one of claims 1 to 11, each being associated with a flexible fluid pipe (18) as defined in any one of claims 1 to 11, and, for each nanosatellite (12) / flexible fluid pipe (18) pair, a system for transferring fluid from a supply propellant reserve (16) carried by the main body (11) to the tank (51) of a spacecraft (50) via said flexible fluid pipe (18), operable when said nanosatellite (12) is anchored to said spacecraft (50) by said reversible anchoring system (21) and the fluidic connector (19) of said flexible fluid pipe (18) establishes a fluid-tight connection with the tank (51) of said spacecraft (50).

13. An assembly comprising at least one supply space station (10) and a spacecraft (50) as defined in any of claims 1 to 12.

14. A method for supplying a spacecraft (50) in orbit around a celestial body with propellant, by means of a supply space station (10) according to any of claims 1 to 12 positioned in said orbit in proximity to said spacecraft (50), said spacecraft (50) comprising at least one tank (51), said method comprising steps of:
- where applicable, separating (42) the nanosatellite (12) from the main body (11) of the supply space station (10),
- moving (43) the nanosatellite (12) toward the spacecraft (50),
- rendezvous (44) between the nanosatellite (12) and the spacecraft (50),
- anchoring (45) the nanosatellite (12) to the spacecraft (50), and establishing a fluid-tight connection between the fluidic connector (19) of the flexible fluid pipe (18) carried by the nanosatellite (12) and the tank (51) of the spacecraft (50),
- transferring fluid (46) from the supply propellant reserve (16) of the main body (11) of the supply space station (10) to the tank (51) of the spacecraft (50), by the flexible fluid pipe (18),
- and separating (47) the nanosatellite (12) and the spacecraft (50).

15. The method according to claim 14, wherein said nanosatellite (12) is controlled by a control module (22) disposed in said main body (11 ) of the space station (10), control signals being successively determined and sent to said nanosatellite (12) by said control module (22) for carrying out the steps of moving (43), rendezvous (44), anchoring (45) to the spacecraft (50) and separating (47) from the spacecraft (50).

16. The method according to claim 14 or 15, wherein the fluid transfer step (46) is controlled by a fluid transfer management module (23) disposed in the main body (11) of the supply space station (10).
